# EUROPEAN PATENT APPLICATION

(11) **EP 1 306 452 A2**
(43) Date of publication of application: **02.05.2003**
(21) Application number: 02022253.5
(22) Date of filing: 02.10.2002
(51) Int. Cl.: C22B 1/243, C22B 7/02

(54) **Method for making metal oxide agglomerates**

(30) Priority: 24.10.2001 JP 2001326201
(71) Applicant: KABUSHIKI KAISHA KOBE SEIKO SHO, Kobe-shi, Hyogo 651-8585 (JP)
(72) Inventor: Tetsumoto, Masahiko, Kobe Corporate Research Labs., Nishi-ku, Kobe-shi, Hyogo 651-2271 (JP); Sugiyama, Takeshi, Kobe Corporate Research Labs., Nishi-ku, Kobe-shi, Hyogo 651-2271 (JP)
(74) Representative: Müller-Boré & Partner Patentanwälte

(57) **Abstract**

A method for making metal oxide agglomerates includes the steps of: preparing a mixed material by adding water and an acidic substance to metal refinery waste including metal oxide which is the main component, a carbonaceous substance in an amount sufficient for reducing the metal oxide, and 0.7 percent by mass or more of an alkali metal on a dry basis; and agglomerating the mixed material to form green agglomerates. The green agglomerates are then dried with a dryer to obtain dry metal oxide agglomerates exhibiting a high strength.

## Description

The present invention relates to metal oxide agglomerates to be reduced in a rotary hearth or the like and to a method for making the same. In particular, the present invention relates to a technology for making metal oxide agglomerates from metal refinery waste having a high alkali metal concentration.

Recently, a method for making reduced iron using a carbonaceous substance such as coal as a reductant instead of natural gas has drawn much attention. For example, a method for making reduced iron including the steps of pelletizing a mixture of fine iron ore and coal to prepare pellets, drying the pellets, placing the dried pellets on a rotary hearth, and heat-reducing the pellets as the pellets travel through the furnace is known in the art.

The advantages of this method in addition to allowing coal to be used as the reductant include the following. The fine iron ore can be directly used in the process, the reduction can be performed at a high speed, and the carbon content in the resulting product can be controlled.

However, a carbonaceous substance such as coal has substantially no effect on the bonding particles of pellets. Thus, iron oxide pellets containing a carbonaceous substance, hereinafter also referred to as the "carbonaceous-substance-containing iron oxide pellets", have a low strength compared to pellets that do not contain carbonaceous substances.
When the low-strength iron oxide pellets are dried and fed into a reducing furnace, the pellets readily shatter into powder causing a decrease in the yield and degradation in the quality of the resulting reduced iron pellets. Moreover, the resulting powder adheres to the hearth and causes problems during the operation.

On the other hand, in order to reduce the production costs in a steel making process, a material having a high contaminant content or a subsidiary material has been increasingly used. As a result, the alkali metal content in the dust generated during a hot metal pretreatment step for desulfurization or in a basic oxygen furnace has increased. Since the hot metal pretreatment dust and the basic oxygen furnace dust have a high iron concentration, these dusts have been recycled into a sintered material, i.e., sintered ore, or a pelletized material, i.e., pellets, that are fed to a blast furnace so as to recover iron therefrom. However, since the amount of alkali that can be fed into the blast furnace is limited in order to prevent adhesion to the inner wall of the blast furnace, dust having a high alkali metal concentration is difficult to recycle into a sintered material. Accordingly, the dust having a high alkali metal concentration is either disposed of as waste or accumulated in the steelmaking plant, thereby increasing the processing costs. Thus, significant benefits can be achieved if the high-alkali-metal-content waste can be used in the rotary hearth furnace for making reduced iron.

When iron oxide pellets containing a carbonaceous substance are made from waste having a high alkali metal concentration, the strength of the dried pellets is low, and the resulting pellets cannot withstand the subsequent handling, which is a further problem.

In order to overcome the above-described problems, the present inventors have examined the behavior of alkali metals inside the pellets having a high alkali metal content with a microscope, an electron probe microanalyzer (EPMA), or the like. The inventors have found that the mechanism that lies behind the decrease in strength is thought to be as follows.

Alkali metal elements such as Na and K locally exist in the dust in the form of oxides such as Na₂O and K₂O or chlorides such as NaCl and KCl. The oxides such as Na₂O and K₂O are allowed to react with part of pelletizing water added to the mixture during pelletizing to produce hydroxides such as NaOH and KOH while consuming the pelletizing water, and are eventually dissolved into the remaining pelletizing water. In contrast, chlorides such as NaCl and KCl directly dissolve into the remaining pelletizing water. Drying these green pellets immediately after pelletizing causes the water to be removed before hydroxides and chlorides that are dissolved in the water are sufficiently and uniformly dispersed inside the pellets. As the water is removed, the hydroxides locally precipitate inside the pellets in the form of hydrates such as NaOH·nH₂O and KOH·mH₂O due to a hydration reaction at a solubility exceeding the saturation solubility. The hydration reaction also causes an increase in volume. Moreover, as the water is removed, NaCl, KCl, and the like locally crystallize inside the pellets while maintaining their directionality. Because hydrates having an increased volume and chlorides that grow with a directionality locally precipitate and crystallize as described above, distortion and stress concentration occur around the precipitants and crystals, thereby drastically decreasing the strength (shatter strength and crushing strength) of the resulting pellets.

An object of the present invention is to provide a method for making metal oxide agglomerates having a high strength after drying from metal refinery waste having a high alkali metal concentration.

To achieve this object, a first aspect of the present invention provides a method for making metal oxide agglomerates including: preparing a mixed material by adding water and an acidic substance to metal refinery waste including metal oxide which is the main component, a carbonaceous substance in an amount sufficient for reducing the metal oxide, and 0.7 percent by mass or more of an alkali metal on a dry basis; and agglomerating the mixed material.

When an acidic substance and water are added to metal refinery waste having a high alkali metal concentration, i.e., 0.7 percent by mass or more on a dry basis, alkali metals such as Na and K, which exist in the waste in the form of oxides such as Na₂O and K₂O and chlorides such as NaCl and KCl, form alkali metal salts by a preferential neutralization reaction with acid contained in the acidic substance. Since these salts immediately dissolve in water, the generation of hydroxides and hydrates resulting from the reaction between alkali metal oxides and water can be prevented. When the mixed material is agglomerated and the resulting agglomerates are dried, fine particles of alkali metal salts become dispersed and precipitate in the pores of the agglomerates. Thus, distortion and stress concentration inside the agglomerates are prevented, and the strength of the agglomerates can be remarkably increased since the alkali metal salts function as a binder.

Here, the alkali metal content of the metal refinery waste on a dry basis is limited to 0.7 percent by mass or more because, at an alkali metal content of less than 0.7 percent by mass, the strength does not decrease dramatically even when no acidic substance is used.

Although no limit is imposed as to the type of acidic substance as long as the substance exhibits acidity, strong acids are preferred since they accelerate the reaction with alkali metal oxides. Preferably, the acidic substance comprises at least one selected from the group consisting of hydrochloric acid, sulfuric acid, and a lignin which are relatively inexpensive.

The metal oxide may comprise iron oxide, nickel oxide, chromium oxide, manganese oxide, zinc oxide, or mixtures of these.

A second aspect of the present invention provides a method for making metal oxide agglomerates, including: washing all or part of metal refinery waste including metal oxide which is the main component, a carbonaceous substance in an amount sufficient for reducing the metal oxide, and 0.7 percent by mass or more of an alkali metal element on a dry basis so as to decrease the alkali metal content to less than 0.7 percent by mass on a dry basis, and optionally adding water to the washed metal refinery waste to make a mixed material; and agglomerating the metal refinery dust or the mixed material.

By washing part or all of the metal refinery waste having a high alkali metal content of 0.7 percent by mass or more on a dry basis with water, alkali metal oxides can be removed since alkali metal oxides are reacted with water to form hydroxides, which dissolve in washing water. Moreover, alkali metal chlorides directly dissolve in the washing water and can be removed. When agglomeration is performed after the alkali metal content is reduced to less than 0.7 percent by mass, and more preferably, 0.6 percent by mass or less, the distortion and stress concentration due to the precipitation of hydrates and the crystallization of chlorides are decreased. As a result, the resulting agglomerates exhibit a high strength even though no acidic substance is added thereto.

A third aspect of the present invention provides a method for making metal oxide agglomerates, including: adding at least one substance selected from the group consisting of KOH, KCl, NaOH, and NaCl to a metal refinery waste including metal oxide which is the main component, a carbonaceous substance in an amount sufficient for reducing the metal oxide, and 0.7 percent by mass or more of an alkali metal element on a dry basis to prepare a mixed material and optionally adding water to the mixed material; and agglomerating the mixed material or the mixed material added with water.

According to this method, the strength of the agglomerates can be increased since these hydroxides and chlorides of alkali metal function as a binder.

A fourth aspect of the present invention provides a method for making metal oxide agglomerates, including: adding water to metal refinery waste including metal oxide which is the main component, a carbonaceous substance in an amount sufficient for reducing the metal oxide, and 0.7 percent by mass or more of an alkali metal element on a dry basis to prepare a mixed material; and maturing the mixed material either before or after agglomeration for at least 5 minutes.

The mixed material is preferably matured for 120 minutes or more, and more preferably, 40 hours or more before agglomeration. According to this method, an aqueous solution of alkali metal salts generated as a result of the reaction between alkali metal oxides and acid evenly disperses into the mixed material, thereby preventing local precipitation of alkali metal salts when the agglomerates are dried. Moreover, since alkali metal salts function as a binder, the strength of the agglomerates can be further increased.

Alternatively, the mixed material may be matured after it is formed into agglomerates for at least 5 minutes, and more preferably 20 minutes or more before drying. The same advantages as in the above case can be achieved.

No limit is imposed as to the type of metal refinery waste as long as the metal refinery waste has a relatively high metal oxide concentration. Examples of the metal refinery waste include various steel mill wastes such as blast furnace dust/sludge, basic oxygen furnace dust, sinter dust, electric furnace dust, mill sludge, and acid-washing sludge. These may be used alone or in combination. Fine iron ore, a carbonaceous substance, or the like may be added, if necessary.

As described above, according to the present invention, metal oxide agglomerates having a high strength after drying can be made from metal refinery waste having a high alkali metal concentration. Since the agglomerates rarely shatter into powder when they are fed into a reducing furnace such as a rotary hearth, the yield of the reduced iron production can be improved, and the quality, i.e., the metallization ratio, of the produced reduced iron can be improved. Moreover, since the hearth does not suffer from adhesion of powder, long-term stable operation can be achieved, and the productivity can be improved.

Fig. 1 is a flow diagram explaining the outline of a method for making metal oxide agglomerates according to a first embodiment of the present invention; and

Fig. 2 is a flow diagram explaining the outline of a method for making metal oxide agglomerates according to a second embodiment of the present invention.

### First Embodiment

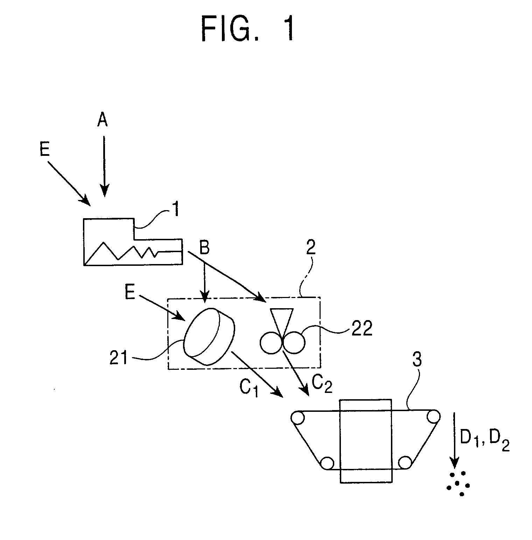

Fig. 1 is a flow diagram explaining the outline of a method for making metal oxide agglomerates according to a first embodiment of the present invention. Referring to Fig. 1, metal refinery waste A is mixed by a mixer 1 to prepare a mixed material B, and the mixed material B is agglomerated using an agglomerator 2. Examples of the agglomerator 2 are a pelletizer 21 for making green pellets C₁ from the mixed material B and a briquetting machine 22 for making green briquettes C₂ by press-forming the mixed material B. The green pellets C₁ or the green briquettes C₂ are dried using a drier 3 to obtain dry pellets D₁ or dry briquettes D₂.

For the metal refinery waste A, steel mill waste such as blast furnace dust/sludge, basic oxygen furnace dust, sinter dust, electric furnace dust, mill sludge, or acid-pickling sludge can be used either alone or in combination. Fine iron ore and/or mill scale may be added as a metal oxide source, if necessary. Waste other than steel mill waste can also be used. Examples of such wastes include dust containing an oxide of a nonferrous metal such as Ni, Cr, or Mn generated through alloy-steelmaking or nonferrous metal refining. Furthermore, a carbonaceous substance may be added to the waste, if necessary. Examples of the carbonaceous substance include coal, fine coke, petroleum coke, char, charcoal, pitch, and the like.

For example, blast furnace dust contains metal oxide, most of which is iron oxide, and a high concentration of carbon, which will still remain in excess after reduction of the metal oxide. Accordingly, the blast furnace dust may be used in combination with another waste having a low carbon concentration so as to adjust the ratio of the metal oxide content to the carbon content in a preferable range.

The metal refinery waste A prepared as above is fed into the mixer 1, such as a known drum mixer, is blended with a predetermined amount of an acidic substance E and water, and the resultant mixture is mixed for a predetermined period of time to prepare the mixed material B. Examples of the acidic substance E include hydrochloric acid, sulfuric acid, lignins such as elemental lignin, lignosulfonic acid, lignosulfonate, and the like. The acidic substance E is preferably diluted with an adequate amount of water in advance and is preferably added to the mixed material B in the form of an aqueous solution. In this manner, the acidic substance E can be uniformly dispersed into the mixed material B.

The amount of the acidic substance E additive is preferably adjusted so that the molar content of hydrogen ions in the acidic substance E is 20% or more, and more preferably 30% or more of the total molar content of the alkali metals contained in the mixed material B. At such an amount, alkali metal oxides are partially neutralized to form alkali metal salts, thereby effectively preventing the generation of alkali metal hydroxide. The upper limit of the amount of the acidic substance E additive is when the molar content of hydrogen ions in the acidic substance E is 100% of the total molar content of the alkali metals since no improvement can be expected exceeding this amount.

The mixed material B is then formed into green pellets C₁ using the pelletizer 21, which is an example of the agglomerator 2. The pelletizer 21 may be of a disk type or of a drum type known in the art. Water may be added during pelletizing, if necessary. Alternatively, all or part of the aqueous solution of the acidic substance E may be added to the mixed material B at this stage. The diameter of the green pellets C₁ is preferably in the range of 6 to 30 mm, and more preferably 9 to 16 mm, from the point of view of handling and the reduction speed in a reducing furnace.

Alternatively, the mixed material B may be press-formed into green briquettes C₂ using the briquetting machine 22, which is another example of the agglomerator 2. The briquetting machine 22 is preferably of a twin-roll type, which exhibits a high productivity. Alternatively, an extruder or a cylinder press may be used as the briquetting machine 22. The volume of each green briquette C₂ is preferably equal to that of the green pellet C₁.

The green pellets C₁ and the green briquettes C₂ prepared as above are then dried to a water content of 1 percent by mass or less with the drier 3, e.g., a moving grate drier, to prepare high-strength dry pellets D₁ or dry briquettes D₂.

Prior to agglomeration of the mixed material B using the agglomerator 2, the mixed material B is preferably matured in a hopper (not shown in the drawing) for at least 5 minutes, more preferably, 120 minutes or more, and most preferably 40 hours or more. In this manner, the aqueous solution of alkali metal salt resulting from the reaction of the alkali metal oxide and acid can be uniformly dispersed into the mixed material B, thereby preventing the local precipitation of the alkali metal salts during drying of the agglomerates. Moreover, alkali metal salts function as a binder and increase the strength.

Alternatively, prior to drying with the drier 3, the green pellets C₁ or the green briquettes C₂ may be matured on a belt conveyor (not shown in the drawing) for at least 5 minutes, and more preferably, 20 minutes or more to increase the strength.

### Second Embodiment

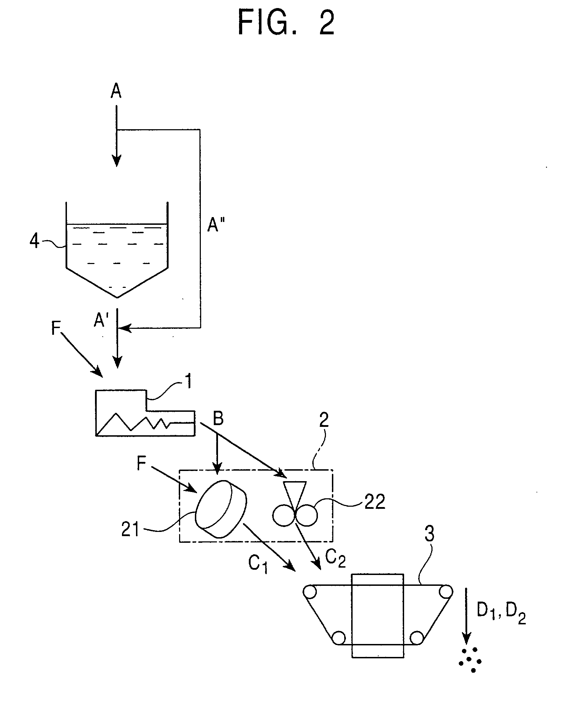

Fig. 2 is a flow diagram explaining the outline of a method for making metal oxide agglomerates according to a second embodiment of the present invention. Referring to Fig. 2, part or all of the metal refinery waste A is washed with water using a washer 4. An example of the washer 4 is a thickener having a filter known in the art. The metal refinery waste A need not be washed entirely, and a partial washing is sufficient to decrease the alkali metal concentration to less than 0.7 percent by mass on a dry basis, and more preferably, 0.6 percent by mass or less on a dry basis. When different types of wastes are used in combination as the metal refinery waste A, these wastes are preferably washed in the order of their alkali metal concentration, i.e., waste having the highest alkali metal concentration is preferably washed first, to best improve the efficiency.

The washed waste A', which has been washed with water and filtered using the washer 4, and unwashed waste A'' are fed into the mixer 1 to prepare the mixed material B. Water may be added if necessary. The rest of the process for making high-strength dry pellets D₁ or dry briquettes D₂ is the same as in the first embodiment.

Note that since the alkali metal concentration of the mixed material B is sufficiently low, no acidic substance additive is necessary in the second embodiment.

In preparing the mixed material B using the mixer 1, an additive F comprising an alkali metal hydroxide or a chloride, such as KOH, KCl, NaOH, or NaCl, is preferably added to the mixed material B since these hydroxides and chlorides function as a binder after the agglomerates have been dried. Preferably, hydroxide or chloride is dissolved in water to make an aqueous solution before being added to the mixed material B, since an aqueous solution can be uniformly dispersed into the mixed material B. When the pelletizer 21 is used as the agglomerator 2, part or all of the aqueous solution of alkali metal hydroxide or chloride may be added to the mixed material B at this stage.

The resulting dry pellets D₁ or the dry briquettes D₂ exhibit excellent strength and do not shatter into powder when they are fed into a reducing furnace (not shown in the drawing), such as a rotary hearth furnace. Thus, reduced iron can be manufactured at a high yield, a high productivity, and without any operational problems.

The additive F comprising an alkali metal hydroxide or a chloride such as KOH, KCl, NaOH, or NaCl is preferably added to the metal refinery waste A after the metal refinery waste A has been washed with water. However, the additive F still exhibits its effects even when the metal refinery waste A is not washed with water.

Note that in the above-described first and second embodiments shown in Figs. 1 and 2, the drier 3 may be omitted. In such a case, the green pellets C₁ or the green briquettes C₂ may be directly fed into a reducing furnace (not shown in the drawings), e.g., a rotary hearth furnace, and dried in a drying zone disposed before a reducing zone. Since the pellets or the briquettes dried in the drying zone exhibit high strength, the resulting iron reduced in the reducing zone does not break or shatter due to mechanical handling when the resulting reduced iron is being discharged from the rotary hearth furnace. Accordingly, reduced iron can be manufactured at a high yield.

### EXAMPLES

The following experiments were conducted to confirm the effects and advantages of the present invention.

### EXAMPLE 1

Blast furnace sludge and hot metal pretreatment dust, the compositions of which are shown in Table 1, were mixed at a ratio by mass of 38:62 to prepare a mixture. Various additives were blended into this mixture using a mixer. Subsequently, the water content of the resulting mixture was adjusted, and the mixture was formed into green pellets having a water content of 13 to 19 percent by mass (dry basis) using a disk pelletizer. After screening the green pellets, the screened green pellets having a diameter in the range of 16 to 19 mm were dried in an electric thermostat for 2 hours at 160°C until the water content thereof was less than 1 percent by mass. Subsequently, the pellets were cooled to obtain dry pellets of Samples 1 to 8. The crushing strength and the shattering strength of the resulting dry pellets were examined for comparative testing.

The crushing strength was examined according to ISO 4700. The shattering strength was indicated as the number of times the dry pellets were dropped onto a level iron plate from a height of 45 cm without breaking.

**Table 1**

| (percent by mass) | | | | | | |
|---|---|---|---|---|---|---|
| | T. Fe | T. C | K | Na | Cl | CaO |
| Blast furnace sludge | 26.4 | 36.8 | 0.638 | 0.095 | 0.69 | 4.35 |
| Hot metal pretreatment dust | 57.0 | 0.64 | 2.08 | 0.57 | 1.92 | 7.44 |

The additives, the amounts of the additives, and the results of the comparative testing are shown in Table 2.

The strength required for the dry pellets differs depending on the type and the scale of the reducing furnace employed. Generally, the required strength of the dry pellets is approximately 3 kg/p or more in the crushing strength and approximately 1 or more, and more preferably, 2 or more in the shattering strength. As shown in Table 2, the dry pellets of Samples 1 and 2, which were comparative examples to which no acidic substance was added, exhibited a crushing strength of 2.47 kg/p or less and a shattering strength of 0.8 or less, although slaked lime or wheat flour was added thereto. The dry pellets of Samples 1 and 2 did not satisfy the required strength.

The dry pellets of Samples 3 to 8, which were invention examples to which an acidic substance, namely, sulfuric acid, hydrochloric acid, or a lignin, was added, exhibited a crushing strength of 5.17 kg/p or more and a shattering strength of 2.9 or more, regardless of whether additives other than the acidic substance were used. The dry pellets of Samples 3 to 8 satisfied the required strength.

In order to examine the behavior of alkali metal elements, the element distribution at a cross-section was examined with the electron probe micro analyzer (EPMA) for each of the dry pellets of Samples 1, 6, and 7. Among the alkali metal elements, only potassium (K), which was contained in the dry pellets at the highest concentration, was examined. In the dry pellet of Sample 1, in which no acidic substance is used, whereas potassium was substantially evenly distributed over the entire cross-section, the chlorine (Cl) concentration was high at the surface region and was low at the center region. It could be assumed from this that solid-phase KCl contained in the dust was first dissolved in the pelletizing water, and was then crystallized at the surface region of the pellets during the drying process. Meanwhile, solid-phase K₂O in the dust was allowed to react with the pelletizing water to produce KOH, and KOH·mH₂O was formed as a result of a hydration reaction during the drying process, which decreased the strength of the dry pellets.

The dry pellets of Sample 6 of the invention, to which an aqueous solution of sulfuric acid was added, contained potassium and sulfur locally distributed at the same places, and this localized distribution was observed over the entire cross-section. The chlorine concentration was high at the surface region and low at the center region. It could be assumed from this that nearly all of the solid-phase K₂O in the dust was allowed to preferentially react with H₂SO₄ to form K₂SO₄, and K₂SO₄ after being dissolved in the pelletizing water precipitated inside the pellets when they were dried. Meanwhile, solid-phase KCl initially present in the dust dissolved in the pelletizing water and precipitated in the surface region of the pellets when they were dried. Thus, the formation of KOH·mH₂O was prevented, and the strength of the dry pellets was increased.

The dry pellets of Sample 7 of the invention, to which an aqueous solution of hydrochloric acid was added, had a high potassium concentration at the surface region and an unobservably low potassium concentration at the center region. The distribution of chlorine was substantially the same as that of potassium. It could be assumed from this that nearly all of the solid-phase K₂O in the dust was allowed to preferentially react with HCl to form KCl, and the resulting KCl and KCl inherently present in the dust dissolved in the pelletizing water and subsequently precipitated at the surface region of the pellets when they were dried. Thus, the formation of KOH·mH₂O was prevented, and the strength of the dry pellets was improved.

**Table 2**

| Sample No. | Additives (part by mass*) | | | | | | Dry pellets | | Reference |
|---|---|---|---|---|---|---|---|---|---|
| | 35 wt.% sulfuric acid | 26 wt.% hydrochloric acid | Lignin | Slaked lime | Wheat flour | Bentonite | Crushing Strength (kg/p) | Shattering strength (no. of times) | |
| 1 | - | - | - | 1.5 | - | - | 0.77 | 0.0 | Comparative Example |
| 2 | - | - | - | - | 1.5 | - | 2.47 | 0.8 | Comparative Example |
| 3 | 6.0 | - | - | - | 1.5 | - | 9.02 | 6.4 | Invention Example |
| 4 | 6.0 | - | - | - | - | - | 5.41 | 3.5 | Invention Example |
| 5 | 6.0 | - | - | - | - | 1.5 | 5.41 | 2.9 | Invention Example |
| 6 | - | 6.0 | - | - | - | - | 9.52 | 14.2 | Invention Example |
| 7 | - | 8.0 | - | 1.5 | - | - | 7.01 | 3.3 | Invention Example |
| 8 | - | - | 1.5 | - | - | - | 5.17 | 3.9 | Invention Example |

| | | | | | | | | | |
|---|---|---|---|---|---|---|---|---|---|
| *The amount of additive relative to the sum of blast furnace sludge and hot metal pretreatment dust, the sum being 100 parts by mass. | | | | | | | | | |

### EXAMPLE 2

As in EXAMPLE 1, the blast furnace sludge and the hot metal pretreatment dust, the compositions of which are shown in Table 1, were mixed at a ratio by mass of 38:62 to prepare a mixed material. The mixed material was washed by stirring the mixed material for 5 minutes in water having a mass double that of the mixed material, discharging the supernatant, and repeating these steps once again. The washed mixed material had an alkali metal concentration (Na + K) of 0.6 percent by mass, which was less than 0.7 percent by mass. After washing, various additives were added to the mixed material, and green pellets were prepared therefrom under the same conditions as in EXAMPLE 1. The resulting green pellets were dried under the same conditions as in EXAMPLE 1 to obtain dry pellets of Samples 11 to 14. The crushing strength and the shattering strength of the dry pellets were examined for comparative testing.

The additives, the amounts of the additives, and the results of the comparative testing are shown in Table 3.

As shown in Table 3, the dry pellets of Sample 11 of the present invention had an alkali metal concentration in the washed mixed material of 0.6 percent by mass, i.e., less than 0.7 percent by mass, and thus exhibited a crushing strength of 5.42 kg/p and a shattering strength of 2.1. The dry pellets of Sample 11 satisfied the required strength, i.e., a crushing strength of 3 kg/p or more and a shattering strength of 2 or more.

The dry pellets of Samples 12 to 14 of the present invention had either KOH or KCl added to the mixed material. The dry pellets of Samples 12 to 14 exhibited a crushing strength of 5.13 kg/p or more and a shattering strength of 4.2 or more, which confirmed the effect of adding KOH, KCl, or the like.

**Table 3**

| Sample No. | Additives (part by mass*) | | | | Dry pellets | | Reference |
|---|---|---|---|---|---|---|---|
| | 26 wt.% hydrochloric acid | 60wt.% KOH | 20 wt.% KCl | Slaked lime | Crushing Strength (kg/p) | Shattering Strength (no. of times) | |
| 11 | - | - | - | 1.5 | 5.42 | 2.1 | Invention Example |
| 12 | - | 2.8 | - | - | 6.35 | 5.2 | Invention Example |
| 13 | 1.85 | 2.8 | - | - | 5.96 | 4.2 | Invention Example |
| 14 | - | - | 3.7 | - | 5.13 | 4.8 | Invention Example |

| | | | | | | | |
|---|---|---|---|---|---|---|---|
| *The amount of additive relative to 100 parts by mass of the mixed material. | | | | | | | |

### EXAMPLE 3

As in EXAMPLE 1, the blast furnace sludge and the hot metal pretreatment dust, the compositions of which are shown in Table 1, were mixed at a ratio by mass of 38:62, and 1.5% of slaked lime was added to the mixed waste to prepare a mixed material. The mixed material was formed into green pellets by three different processes shown in Table 4, and the resulting green pellets were dried under the same conditions as in EXAMPLE 1 to obtain dry pellets of Samples 21 to 23. The crushing strength and the shattering strength of the dry pellets were examined for comparative testing.

The conditions for forming green pellets, the amount of an additive, and the results of the comparative testing are shown in Table 4.

As shown in Table 4, the dry pellets of Sample 21 exhibited low strength, namely, a crushing strength of 1.17 kg/p and a shattering strength of 0.1, because all of the pelletizing water was added to the mixed material during pelletizing and no maturing time was provided. In contrast, the dry pellets of Samples 22 and 23 exhibited a crushing strength of 2.09 kg/p or more and a shattering strength of 2.2 because only part of the pelletizing water was added to the mixed material when pelletized and the mixed material added with water was matured for a predetermined period of time. These results confirmed the effects of maturing the mixed material added with water for a certain period of time.

**Table 4**

| Sample No. | Pelletizing conditions | Dry pellets | |
|---|---|---|---|
| | | Crushing Strength (kg/p) | Shattering Strength (no. of times) |
| 21 | All of the pelletizing water was added during pelletizing | 1.17 | 0.1 |
| 22 | 10 mass% of water was added to the mixed material and the resulting mixture was pelletized after 5 min of maturing | 2.09 | 1.1 |
| 23 | 10 mass% of water was added to the mixed material and the resulting mixture was pelletized after 40 hours of maturing | 2.61 | 2.2 |

## Claims

1. A method for making metal oxide agglomerates comprising:
preparing a mixed material by adding water and an acidic substance to metal refinery waste comprising metal oxide which is the main component, a carbonaceous substance in an amount sufficient for reducing the metal oxide, and 0.7 percent by mass or more of an alkali metal on a dry basis; and
agglomerating the mixed material.

2. The method according to claim 1, wherein the acidic substance comprises at least one selected from the group consisting of hydrochloric acid, sulfuric acid, and a lignin.

3. A method for making metal oxide agglomerates, comprising:
washing all or part of metal refinery waste comprising metal oxide which is the main component, a carbonaceous substance in an amount sufficient for reducing the metal oxide, and 0.7 percent by mass or more of an alkali metal element on a dry basis so as to decrease the alkali metal content to less than 0.7 percent by mass on a dry basis, and optionally adding water to the washed metal refinery waste to make a mixed material; and
agglomerating the metal refinery waste or the mixed material.

4. A method for making metal oxide agglomerates, comprising:
adding at least one substance selected from the group consisting of KOH, KCl, NaOH, and NaCl to metal refinery waste comprising metal oxide which is the main component, a carbonaceous substance in an amount sufficient for reducing the metal oxide, and 0.7 percent by mass or more of an alkali metal element on a dry basis to prepare a mixed material and optionally adding water to the mixed material; and
agglomerating the mixed material or the mixed material added with water.

5. A method for making metal oxide agglomerates, comprising:
adding water to metal refinery waste comprising metal oxide which is the main component, a carbonaceous substance in an amount sufficient for reducing the metal oxide, and 0.7 percent by mass or more of an alkali metal element on a dry basis to prepare a mixed material; and
maturing the mixed material either before or after agglomeration for at least 5 minutes.
